# EUROPEAN PATENT APPLICATION

(11) **EP 2 503 211 A2**
(43) Date of publication of application: **26.09.2012**
(21) Application number: 12160263.5
(22) Date of filing: 20.03.2012
(51) Int. Cl.: F16M 11/10, F16M 11/22, F16M 13/02

(54) **Flat display device**

(30) Priority: 21.03.2011 CN 201120075488 U
(71) Applicant: Boe Technology Group Co. Ltd., Beijing 100015 (CN)
(72) Inventor: Han, Rui, Beijing 100176 (CN); Xiao, Xiangchun, Beijing 100176 (CN)
(74) Representative: Klunker . Schmitt-Nilson . Hirsch

(57) **Abstract**

An embodiment of the present disclosure provides a flat display device, and the flat display device comprises a display panel (1) and a supporting base (2) connected with the display panel (1), and the supporting base (2) is provided with a driving circuit board (3) for driving the display panel (1) to display.

## Description

### BACKGROUND

Embodiments of the present disclosure relates to a flat display device

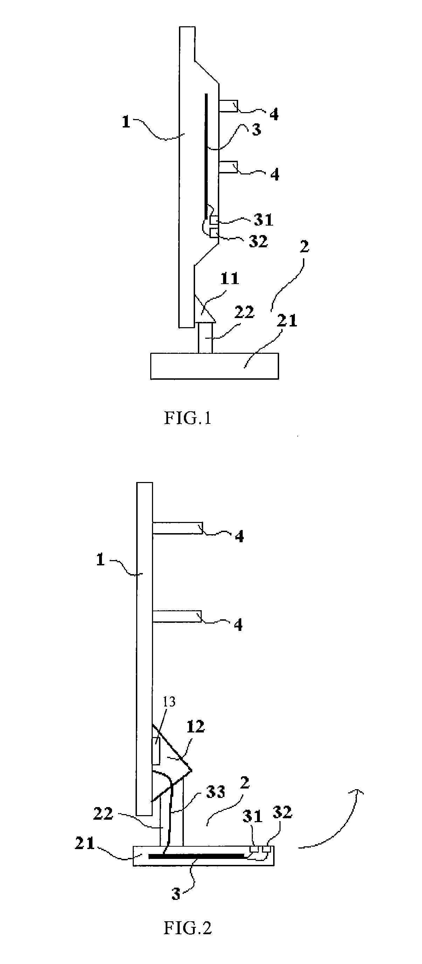

A conventional flat display device is shown in Fig. 1, which comprises a display panel 1 showing images and a supporting base or stand 2 for supporting the display panel 1. Inside the back side of the display panel 1 (i.e., the side far away from the display side) is provided with a driving circuit board for providing electric energy, video driving signals and so on for the display panel 1. The driving circuit board 3 is electrically connected with a power source port 31 and video signal port 32 on the back side of the display panel 1 to receive the electric energy and video signals. The supporting base 2 comprises a pedestal 21 and a supporting post 22 connected between the pedestal 21 and the display panel 1. The supporting post 22 is connected to the display panel 1 by a connecting section 11 on the back side of the display panel 1. The connection between the supporting post 22 and the connecting section 11 is made as a detachable connection so that the display panel 1 can be hung on some stationary articles such as a wall or a furniture by a suspension structure 4 on the back side of the display panel 1 when the supporting post 22 is detached from the display panel 1, thus a wall suspension type display can be achieved.

As to the conventional structure as shown in Fig.1, the inventors found that at least following problems exist in the flat display device: because the drive circuit panel 3 is provided in the back side of the display panel 1, the number of devices in the display panel 1 is large, the thickness of the display panel 1 is big, and it is difficult to further decrease the thickness of the display panel 1.

### SUMMARY

In order to solve the problems in the conventional structure, the disclosed technology intends to provide a flat display device and a supporting base to support a display panel.

One embodiment of the present disclosure provides a flat display device, comprising a display panel and a supporting base connected with the display panel, with the supporting base provided with a drive circuit panel driving the display panel to display.

Another embodiment of the present disclosure provides a supporting base to support the display panel. The supporting base comprises a drive circuit panel therein to drive the display panel to display.

In the flat display device of the embodiment of the present disclosure, the driving circuit board is provided outside the display panel, without occupying space inside the display panel. It is not necessary to design a structure such as a driving circuit board holder or the like; therefore, the thickness of the display panel can be made thinner, and also it is easy to make the display panel thin.

Further scope of applicability of the present disclosure will become apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the following detailed description.

### BRIEF DESCRIPTION OF THE DRAWINGS

The present disclosure will become more fully understood from the detailed description given hereinafter and the accompanying drawings which are given by way of illustration only, and thus are not limitative of the present disclosure and wherein:

Fig. 1 shows the schematic drawing of the structure of the convention flat display device;

Fig. 2 shows the schematic drawing of the structure of the flat display device according to the present disclosure; and

Fig. 3 shows the schematic drawing of the structure of the flat display device when being suspended.

### DETAILED DESCRIPTION

To make objectives, technical solutions and advantages provided by the embodiments of the present disclosure more clearly, a clear and full description will be made to the technical solutions of embodiments of present disclosure hereinafter in connection with the accompanying drawings. Apparently, rather than all the embodiments, embodiments to be described are only a part of embodiments of present disclosure. Based on the embodiments of the present disclosure, other embodiments conceived by those skilled in the art without inventive work would fall within the scope of present disclosure.

An embodiment of the present disclosure provides a flat display device, which comprises a display panel and a supporting base connected with the display panel. The supporting base is provided therein with a driving circuit board to drive the display panel to display.

In the flat display device according to the embodiment of the present disclosure, the driving circuit board is provided outside the display panel, without occupying the space inside the display panel; a driving circuit board holder inside the display panel become unnecessary; therefore, the thickness of the display panel can be made thinner, and it is easy to achieve the thin type display panel and further make the display panel more aesthetic. Moreover, because the driving circuit board is provided within the supporting base, it is not necessary to add other components for accommodating the driving circuit board within the flat display device, so that the overall structure of the flat display device is made simple. Meantime, because of the separation of the driving circuit board and the display panel, maintenance operation becomes convenient. The heat occurred from the driving circuit board and the display panel can dissipate separately, which makes the dissipating effect of the flat display device better.

Embodiment

An embodiment of the present disclosure provides a flat display device, for example, a liquid crystal display (LCD) device, a plasma display panel (PDP) device, an organic light-emitting display (OLED) device, a surface conduction electron-emitting device, or the like.

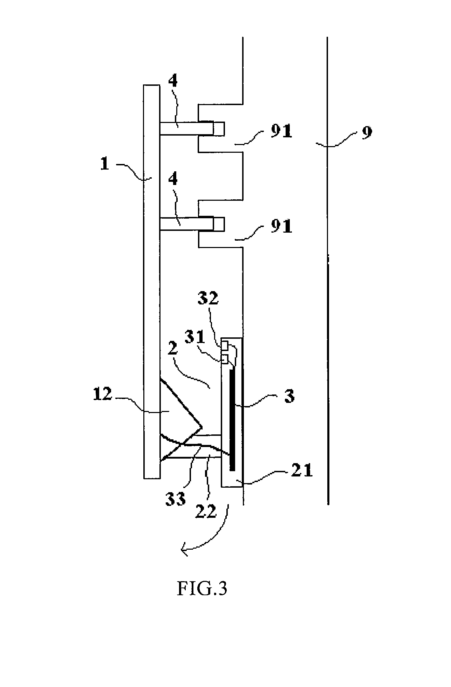

As shown in Figs. 2 and 3, the flat display device comprises a display panel 1 and a supporting base 2 connected with the display panel 1. The supporting base 2 is provided with a driving circuit board 3 therein to drive the display panel 1 to display. The display panel 1 comprises an optical system to display images and the relevant components, and for example, the display panel 1 of a LCD device may comprise a backlight module, a LCD panel, an outer frame and so on. The driving circuit board 3 can be referred to as a system circuit board, which may further comprise a power source circuit board and a control circuit board. The driving circuit board 3 can be used to provide power source and video driving signals to the display device so as to control the display panel 1 to display predetermined images. The supporting base 2 can be used to support the display panel 1.

In the flat display device of the present embodiment, the driving circuit board 3 is positioned within the supporting base 2, without occupying the space inside the display panel 1, thereby making the thickness of the display panel 1 thinner and achieving the thin type the display panel 1. Moreover, because the supporting base 2 is a component typically provided in a conventional flat display device, the mount of the drive circuit panel 3 in the supporting base 2 does not increase the complexity of the flat display device. In the meantime, because the driving circuit board 3 is separated from the display panel 1, maintenance become convenient and the effect of heat dissipation is better.

In an example, a power source port 31 and/or a video signal port 32 connected with the driving circuit board 3 may be also provided on the supporting base 2 to provide the required power source and video signals to the driving circuit board 3. Therefore, after the driving circuit board 3 can processes the power source and video signals in advance, and then the processed signals can be provided to the display panel 1. Because the power source and video signals are input to the driving circuit board 3 first and then to the display panel 1, if the power source port 31 and video signal port 32 are mounted on the supporting base 2, the length of the connection line can be shorten, making the structure of the flat display device simpler.

In an example, the driving circuit board 3 can be electrically connected to the display panel 1 by a harness 33. The harness 33 can be provided inside the supporting base 2 to make the appearance of the flat display device more concise and simple. Here, the electrical connection between the driving circuit board 3 and the display panel 1 can be established by another means, such as metal circuits printed on the inner wall of the supporting base 2. Or, the driving circuit board 3 can wirelessly provide power source and video driving signals to the display panel 1. The protection scope of the present disclosure is not limited to these ways.

In an example, the supporting base 2 comprises a pedestal 21 and a supporting post 22. The driving circuit board 3 can be positioned inside the pedestal 21. The pedestal 21 is used to contact the supporting face such as the ground or table so as to provide solid supporting basis for the display panel 1. The supporting post 22 is connected between the pedestal 21 and the display panel 1 to support the display panel 1. To provide a steady support, the area of the pedestal 21 is determined as desirable. Therefore, the mount of the driving circuit board 3 inside the pedestal 21 is helpful to make use of the space in the pedestal 21. Apparently, modifications or substitutions can be made to the above pedestal 21 and the supporting post 22; for example, the supporting post 22 can move relative to the pedestal 21 to present the display panel 1 in different angles or orientation; or the supporting post 22 can be made to be telescopic to adjust the height of the display panel 1. The protection scope of the present disclosure is not limited to these ways.

In an example, the supporting base 2 (or the supporting post 22) can be connected to the display panel 1 by a connecting section 12. The connecting section 12 can be provided at the side of the display panel 1 far away from the display side (i.e., the back side of the display panel 1). A speaker 13 can be provided inside the connecting section 12. This kind of design makes use of the space inside the connecting section 12 to provide the display device with speaking function (for example, as a television) without increasing the volume of the flat display panel. Certainly, the supporting base 2 can be connected to the display panel 1 by other means, such as directly connected at the bottom of the display panel 1.

In an example, a suspension structure 4 can be provided on the display panel 1 and/or the supporting base 2 to suspend the flat display device on a stationary article 9 such as wall, roof, furniture and so on, to achieve a suspended display device.

The suspension structure 4 may one or more of the following components: hooks, loops, wires, grooves for suspension, projections for suspension, and the like. These components can cooperate with a stationery structure 91 on the stationery article 9 (such as nails, loops, sticks, grooves or projections) to suspend the flat display device. Apparently, there are kinds of the suspension structure 4, and therefore detailed description of the exemplary structures is omitted for simplicity.

The suspension structure 4 is preferably provided on the side of the display panel 1 far away from the display side (i.e., the back side of the display panel); this design on the one hand can make the provision of the suspension structure 4 easy, and on the other hand prevent the suspension structure 4 from affecting the appearance of the flat display panel. However, it should be understood that the suspension structure 4 can also be provided at other positions on the display panel 1 (such as provided on the top of the display panel 1), or provided on the supporting base 2 (for example on the bottom side of the pedestal 21, i.e., a hook structure can be provided to cooperate with the stationery article 9), or the suspension structure 4 can be provided on the display panel 1 and the supporting base 2 at the same time. The protection scope of the present disclosure is not limited to these ways.

In an example, the supporting base 2 is pivotally connected with the display panel 1 (i.e., the supporting base 2 can rotate relative to the display panel 1). For example, as shown in Figs. 2 and 3, the supporting post 22 is connected on the supporting section 12 to rotate as indicated in the arrow direction. Because the supporting base 2 is pivotally connected to the display panel 1, when the supporting base 2 supports the display panel 1, the angle of the display panel 1 can be adjusted to reach the best visual effects. When the display panel 1 is hung with the suspension structure 4, as shown in Fig. 3, the supporting base 2 can be rotated to the back position of the display panel 1, avoiding disadvantageously affecting the appearance of the flat display device (functioning to assist positioning). Of course, when the display panel 1 is suspended, the supporting base 2 can be rotated to the front side, right or left side, or other positions of the display panel 1 for different functions (for example, as the platform for holding something such as a remote control).

In an example, the flat display device can further comprise a positioning structure (not shown in the drawings) to position the supporting base 2 relative to the display panel 1; therefore, when the display panel 1 is supported by the supporting base 2, the positioning structure can avoid swinging of the display panel 1. When the suspension structure 4 hang the flat display device, the positioning structure can prevent the supporting base 2 from dropping from behind the display panel 1.

Apparently, the above pivotal connection and positioning structure may be in various forms. For example, one end of the supporting post 22 can be provided with a rotation axle, and the connecting section 12 can be provided with bearings, thereby the supporting post 22 can be rotated in the connecting section 12. Or, the positioning structure can be formed as a block to stick the supporting base 2 at a particular position. The protections scope of the present disclosure is not limited to those ways. These rotation connections and positioning structures may be in various forms; therefore the detailed description regarding their specific structures is omitted here.

The embodiment of the disclosure being thus described, it will be obvious that the same may be varied in many ways. Such variations are not to be regarded as a departure from the spirit and scope of the disclosure, and all such modifications as would be obvious to those skilled in the art are intended to be included within the scope of the following claims.

## Claims

1. A flat display device, comprising:
a display panel, and
a supporting base connected with the display panel,
wherein the supporting base comprises a driving circuit board for driving the display panel to display.

2. The flat display device according to Claim 1, further comprising:
a suspension structure on the display panel and/or the supporting base to suspend the flat display device.

3. The flat display device according to Claim 2, wherein the suspension structure is provided on one side of the display panel far away from the display side.

4. The flat display device according to Claim 2, wherein the suspension structure comprises a hook, a loop, a wire, a groove for suspension or a projection for suspension.

5. The flat display device according to Claim 2, wherein the supporting base is pivotally connected to the display panel.

6. The flat display device according to Claim 5, further comprising:
a positioning structure to position the supporting base relative to the display panel.

7. The flat display device according to Claim 1, wherein the supporting base comprises:
a pedestal; and
a supporting post connected between the pedestal and the display panel.

8. The flat display device according to Claim 7, wherein the driving circuit board is provided inside the pedestal.

9. The flat display device according to Claim 1, wherein the supporting base is connected to the connecting section provided at the side of the display panel far away from the display panel, and a speaker is provided inside the connecting section.

10. The flat display device according to Claim 1, wherein a power source port and/or a video signal port electrically connected with the driving circuit board is further provided on the supporting base.

11. The flat display device according to Claim 1, wherein the driving circuit board is electrically connected with the display panel by a harness provided inside the pedestal.

12. A supporting base for supporting a display panel, comprising a driving circuit board therein for driving the display panel to display.

13. The supporting base according to Claim 12, further comprising:
a pedestal, the driving circuit board being provided in the pedestal;
a supporting post connected between the pedestal and the display panel, wherein the driving circuit board is provided in the pedestal.
